(19) **Europäisches Patentamt**

**European Patent Office**

**Office européen des brevets**

(11) **EP 1 405 525 B1**

(12) **EUROPEAN PATENT SPECIFICATION**

(45) Date of publication and mention
of the grant of the patent:
**07.06.2006 Bulletin 2006/23**

(51) Int Cl.:
***H04N 7/26*** (2006.01)   ***H04N 7/24*** (2006.01)
***G06T 1/00*** (2006.01)

(21) Application number: **02748793.3**

(22) Date of filing: **17.06.2002**

(86) International application number:
**PCT/EP2002/006672**

(87) International publication number:
**WO 2003/003746 (09.01.2003 Gazette 2003/02)**

(54) **VIDEO/IMAGE COMMUNICATION WITH WATERMARKING**

BILD VIDEO-KOMMUNIKATION MIT WASSERZEICHEN

COMMUNICATION VIDEO/IMAGE A FILIGRANES

(84) Designated Contracting States:
**AT BE CH CY DE DK ES FI FR GR IE IT LI LU MC
NL PT SE TR**

(30) Priority: **28.06.2001 GB 0115884**

(43) Date of publication of application:
**07.04.2004 Bulletin 2004/15**

(73) Proprietor: **MOTOROLA, INC.
Schaumburg, IL 60196 (US)**

(72) Inventors:
• **HOBSON, Paola, Marcella
Alton, Hampshire GU34 2SQ (GB)**
• **HARE, Jonathon, Stephen
Tadley, Hampshire RG26 3UA (GB)**

(74) Representative: **Cross, Rupert Edward Blount et al
Boult Wade Tennant
Verulam Gardens
70 Gray's Inn Road
London WC1X 8BT (GB)**

(56) References cited:
**US-A- 5 991 426**

• **MOBASSERI B G: "EXPLORING CDMA FOR
WATERMARKING OF DIGITAL VIDEO"
PROCEEDINGS OF THE SPIE, SPIE,
BELLINGHAM, VA, US, vol. 3657, 25 January 1999
(1999-01-25), pages 96-102, XP000949141**
• **TSANG K F ET AL: "ROBUST AND HIGH QUALITY
VIDEO WATERMARKING WITH THE USE OF
TEMPORAL REDUNDANCY" PROCEEDINGS OF
THE SPIE, SPIE, BELLINGHAM, VA, US, no. 4314,
22 January 2001 (2001-01-22), pages 55-63,
XP008002936**

**Description**

Field of the Invention

This invention relates to video transmission systems and related video encoding/decoding techniques. The invention is applicable to, but not limited to, a video compression system employing video watermarking where any tampering of a video image or portion of video image is to be detected.

Background of the Invention

The ability to transmit real-time video and/or image data is a desirable characteristic of many current wireline and wireless communication systems. However, it is known that individual images/pictures, or a series of images say, in a transmitted video stream, may be subjected to 'attacks', i.e. the images may have been tampered with. Therefore, a need exists to protect image or video transmissions from such undesirable tampering. One known technique employed to protect still/video images or documents is by the use of "watermarks".

In the context of the present invention, the terms 'video' and 'image' are used interchangeably, with the term 'video' generally used to represent one or more still images.

Wolfgang R, Podilchuk C, Delp E "Perceptual watermarks for digital images and video", SPIE Conference on Security and Watermarking of Multimedia Content, January 1999, describes some state of the art watermarking methods for use with video and images.

Protection of digital media (including image and video) has also become a key standardisation topic within the multimedia industry over the last year. Police users have formally stated that they do not envisage using digitally transmitted and processed images for evidential purposes without the existence of reliable tamper detection methods.

The European Broadcasting Union has issued a second call for systems that offer watermarking of multimedia transmissions for entertainment applications. In addition, the International Standards Organisation (ISO) has set up a working group known as MPEG-21, whose essential function is to investigate digital rights management including the authentication of multimedia data.

In image watermarking, a known binary pattern or signature is embedded into an image at the moment of image acquisition. Such watermarks are termed "robust", because they are designed to remain intact regardless of any post-processing of the image such as filtering, cropping, etc.

While such watermarks do provide a useful degree of protection, they cannot at present be wholly relied on in a court of law. The purpose of these watermarking methods is such that they are not designed to possess the required degree of surety that an image has not been tampered with, in order for the image to be used as evidence.

Thus, there exists a need in the field of the present invention to provide a video communication unit and methods, based on a watermarking system, that can be used for testing a video sequence for evidence of tampering, wherein the abovementioned disadvantages may be alleviated. Furthermore, there exists a need for a labelling method to highlight areas of a video sequence that are detected as having been tampered with. Additionally, it would be beneficial to visually label tampered video sequences such that they are rendered unusable, or valueless, to the attacker.

Published United States patent applications US-A-5875249 and US-A-5734752 are known.

An article entitled 'Exploring CDMA for watermarking of digital video' by B.G. Mobasseri, Proceedings of the SPIE, SPIE, Bellingham, VA, US, vol. 3657, 25 January 1999, pages 96-102 (XP000949141) discloses a method for applying CDMA in the watermarking of uncompressed digital video.

US patent no. 5,991,426 discloses a method for inserting a digital watermark into multimedia data containing two image fields by placing a positive watermark into a first field and a negative watermark into a second field. The positive watermark and negative watermark are opposite of one another. The two fields can be interlaced fields of a field-based video signal or alternate rows of a frame-based video signal. The watermark is extracted from the field-based watermarked data by separating one of the fields from the other field to generate a watermarked signal.

An article entitled 'Robust and High Quality Video Watermarking with the use of Temporal Redundancy' by K.F. Tsang, Proceedings of the SPIE, SPIE, Bellingham, VA, US, no. 4314, 22 January 2001, pages 55-63 (XP008002936), describes a video watermarking technique which uses the characteristic of temporal redundancy of video sequence to improve the quality and robustness of the watermarked sequence.

Statement of Invention

The present invention provides video communication units as claimed in claims 1, and 7, a video transmission system as claimed in claim 17, a mobile radio device as claimed in claim 18, a method of watermarking a video signal transmission as claimed in claim 20, a method of detecting tampering of a watermarked digital image, as claimed in claim 27, a method of visually labelling a video sequence that contains an attacked watermark, as claimed in claim 28, and a storage medium storing processor-implementable instructions for controlling a processor to carry out the methods of the present invention, as claimed in claim 34.

Brief Description of the Drawings

Exemplary embodiments of the present invention are now described with reference to the accompanying drawings, in which:

> FIG. 1 shows a watermark embedding method, in accordance with the preferred embodiment of the invention.
> FIG. 2 shows a random grid-based method using the 5th bit plane of a video sequence, in accordance with the preferred embodiment of the invention.
> FIG. 3 shows a flowchart of a decision process for determining whether tampering has occurred, in accordance with the preferred embodiment of the invention.
> FIG. 4 shows a block diagram of a video communication system incorporating a communication unit embedding a watermark, and a communication unit detecting a watermark, in accordance with the preferred embodiment of the invention.

Description of Preferred Embodiments

The inventive concepts described herein find particular application in the current MPEG Standards activities, where a standard watermarking system for video use is to be defined. The detection of tampering, and the ability to determine what type of tampering has taken place, are necessary steps in ensuring user confidence in the images and video sequences a user is viewing in a potentially hostile multimedia communication environment.

In summary, the preferred embodiment of this invention aims to pre-process video material such that detection of tampering can take place.

Most current image and video watermark methods focus on pre-processing video and images such that any embedded watermark can be recovered, regardless of tampering, for example in copyright applications. The method described below, however, provides for 'fragile' watermarks that are destroyed when the images are altered.

Furthermore, the method makes clear that content has been tampered with, such that the person carrying out the unauthorised processing realises that their actions are evident. As a consequence, they cannot re-sell or distribute the video as an "original".

As an example, let us consider a person making "pirated" video files for unauthorised distribution via an internet web site. The preferred method, as described below, identifies where the video had been tampered with (e.g. in reformatting the video for web distribution), and applies a label to the tampered area, thereby rendering the video unsuitable for onward distribution.

The preferred embodiment of the present invention can be applied to video sequences consisting of at least two image frames. Furthermore, the preferred embodiment of the present invention can be applied to image formats including $YC_bC_r$ (a standard representation of a colour image, as specified in ITU Rec 601), red/green/blue (RGB), or any single component (e.g. Y only) of an image format consisting of more than one component. Advantageously, the preferred embodiment of the present invention can also be applied in a restricted area or region of an image, or throughout the entire image.

The watermark arrangement of the preferred embodiment of the invention clearly shows when tampering has occurred, as tamper evident information is embedded into the video data stream. In summary, the method operates by splitting a video sequence into pairs of frames, and combining various portions of each frame to apply a watermark bit to the video or image signal transmission.

Furthermore, the method allows the video player to locate the exact spatial and temporal position of the tampering as the video is being played.

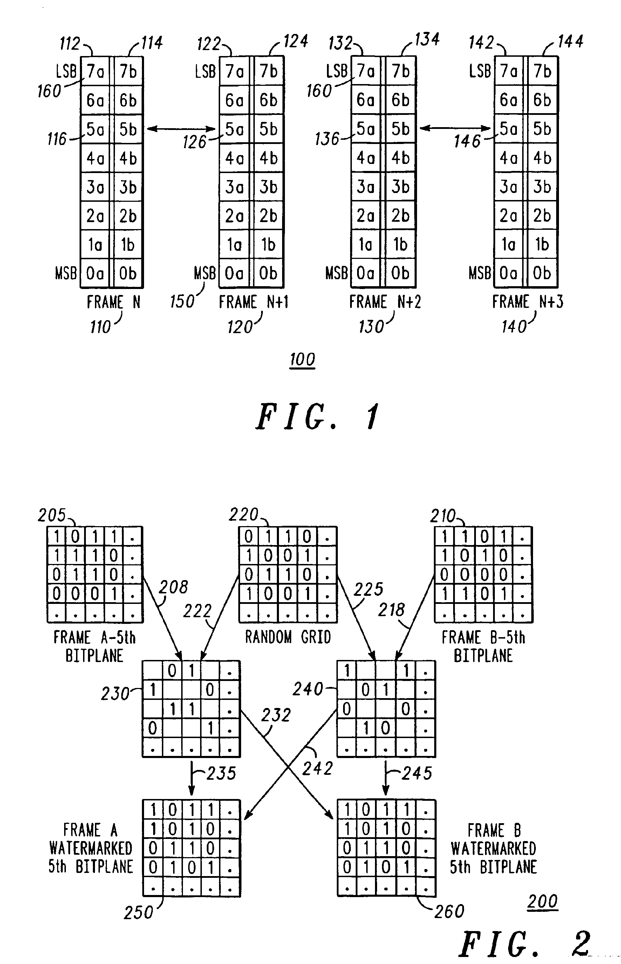

Referring first to FIG. 1, a watermarking method 100 is shown, in accordance with the preferred embodiment of the invention. The watermarking method 100 includes a sequence of video/image frames. In accordance with the preferred embodiment, the frames are partitioned into groups of two frames, for example frame 'N' 110 in conjunction with frame 'N+1' 120, and frame 'N+2' 130 in conjunction with frame 'N+3' 140.

Four frames are shown for clarity purposes only. Each video/image frame is divided into two portions - portion 'A' 112, 122, 132, 142 and portion 'B' 114, 124, 134, 144 respectively. Each video/image frame includes a number of data bits, ranging from a most significant bit plane (MSB) - 'bit 0' 150 to a least significant bit plane (LSB) - 'bit 7' 160. Again, each frame is shown as having eight bit planes for clarity purposes only.

The preferred method works by splitting the video sequence into consecutive pairs of frames, for example frame 'N' 110 in conjunction with frame 'N+1' 120. Each frame is then split into two portions, with the bit planes denoted by an 'a' suffix, or a 'b' suffix. In particular, the bits within the 5th bit plane of each frame 116, 126 and 136, 146 are selected for manipulation, as shown in greater detail with respect to FIG. 2.

It is within the contemplation of the invention that a video/image transmission system having any number of frames in a sequence of video/image frames, including any number of bit planes more than two, would benefit from the inventive concepts described herein.

The usual representation of image data is as a series of pixels, located as rows and columns of an image. Common image formats include representation of each pixel in a number of bits, from 6 to 12 bits per component of the image. As an example, each single component (R, G or B) of a colour image may have 8 bits per pixel. Alternatively, an infrared image may have 12 bits per pixel, represented as a luminance component.

A "bit plane" representation is the term given to the collection of individual bits at any one-bit position of a pixel across the entire image. As an example, consider an image or image region of size k columns and j rows, with N bits per pixel. Each of the (k*j) pixels has 'N' bits, which are ordered from a least significant bit (LSB) usually termed bit 'N-1', up to a most significant bit (MSB) termed bit '0'.

A bit plane is a representation of the collection of (k*j) bits considered at one bit position P, where $0<=P<=(N-1)$. Thus, the expression "the most significant bit plane" means that we consider the collection of all bit 0's of all (k*j) pixels in an image or image region. For an image comprising 'N' bits per pixel, there will be 'N' bit planes.

Referring next to FIG. 2, a method of embedding a watermark 200 by manipulating the $5^{th}$ bit plane of each frame 116, 126 and 136, 146 as indicated with respect to FIG. 1 is shown, in accordance with the preferred embodiment of the invention.

As indicated, each frame includes two portions, a frame A and a frame B. In particular, bits from the $5^{th}$ bit plane of frame A and frame B are manipulated. In frame A 205, half of the $5^{th}$ bit plane bits are interjected 208 into a first intermediate grid 230, with their positions determined by the location of bits of value '1' 222 in a random grid 220 of the same size as grid 230. The remaining half of the $5^{th}$ bit plane bits from frame A 205 are then discarded.

The same operation is performed for frame B. In frame B 210, half of the $5^{th}$ bit plane bits are interjected 218 into a second intermediate grid 240, with their positions determined by the location of bits of value '0' 232 in the same random grid 220. The remaining half of the $5^{th}$ bit plane's bits from frame B 210 are then discarded.

The two intermediate grids 230, 240 are combined to form a new representation of the 5th bit plane, which is then duplicated 232, 242 to replace the original 5th bit plane of both Frame A 205 and Frame B 210.

In this manner, watermarked frame A 250 carries half of the $5^{th}$ bit plane from frame B 210 and watermarked frame B 260 carries half of the $5^{th}$ bit plane from frame A 205. Furthermore, both 5th bit planes are now identical.

It is within the contemplation of the invention that one or more grids may comprise the whole image, or may be defined as an arbitrary block size, which is repeated throughout the image.

Half of the number of bits from frame A and frame B have been selected for simplicity purposes only, the aim being to decrease the visibility of the watermark. However, it is within the contemplation of the invention that other ratios of bit numbers can be used. Furthermore, using pairs of adjacent frames will further decrease visibility as temporal redundancy means adjacent frames are similar. The use of a random grid, to determine which bits from frame A and frame B are used, will also decrease visibility. Further, such a process increases security, as an attacker will not know from which frame the bits originated.

As an example of the method, let us consider an image of dimensions N*M pixels, for example a common intermediate format (CIF) image with dimensions of 352*288 pixels. Divide this image into blocks of dimensions 'n*m' pixels where:

$$1 < n <= N \qquad (1)$$

$$2 < m <= M \qquad (2)$$

Typically n*m might be 8*8, 16*16 or 32*32.

Let the 5th bit plane components of the pixels of each n*m block of frame A, that we wish to make tamper evident be denoted by $\{a_{jk,}\}$ and those of a next frame B be denoted by $\{b_{jk,}\}$, where:

$$1 <= j <= n, \text{ and} \qquad (3)$$

$$1 <= k \; <= \; m \hspace{4cm} (4)$$

First construct a grid of random binary digits $\{r_{jk,}\}$ using any secret or public key. Then generate an output n*m sized block $\{c_{jk,}\}$ of 5th bit plane components which will replace the 5th bit planes $\{a_{jk,}\}$ and $\{b_{jk,}\}$ of the pixels in their respective image frames where $\{c_{jk,}\}$ is generated by the following rules:

$$\text{for } 1 <= j <= n \hspace{4cm} (5)$$

$$\text{for } 1 <= k <= m \hspace{4cm} (6)$$

$$\text{if } \{r_{jk,}\} \text{ equals } 1 \text{ then } \{c_{jk,}\} = \{a_{jk,}\} \hspace{1cm} (7)$$

$$\text{else } \{c_{jk,}\} = \{b_{jk,}\} \hspace{4cm} (8)$$

For minimum visibility, frames A and B should be adjacent in time, such that the differences between the blocks are small, and to reduce processing latency. However, any chosen interval between A and B may be used.

It is noteworthy that for improved robustness to attack, and reduced disturbance to the original image, a subset of pixels in a frame may be chosen for this process, in contrast to using the entire video/image frame.

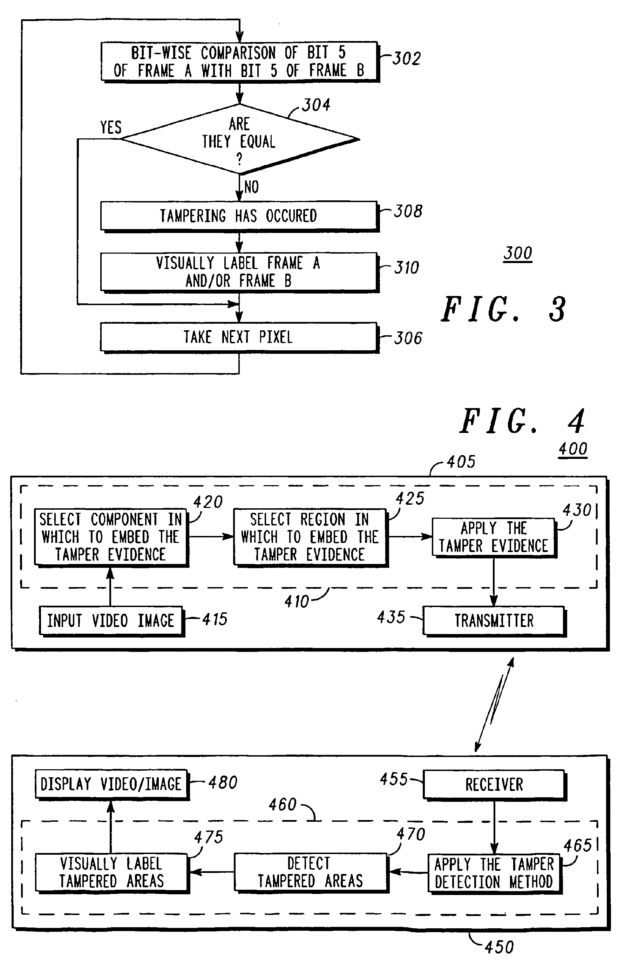

Referring next to FIG. 3, a method of detecting a watermark 300 is shown, in accordance with the preferred embodiment of the invention.

In order to detect tampering, a comparison between the 5th bit plane of a received frame A is made with the 5th bit plane of a received frame B on a pixel by pixel basis, within any or all of the blocks to which the tamper evidence method has been applied, as in step 302. If the comparison yields a match, namely the bit planes are equal in step 304, the next pixel is selected, as shown in step 306. Any tampering in frame A or B will cause the bit planes not to match. With this approach, it is not possible to detect whether frame A or frame B has been tampered with, if the 5th bit planes fail to match. It is only possible to detect that one of frame A or frame B has been affected.

If the comparison in step 304 does not yield a match, namely the bit planes are not equal indicating tampering, in step 308, the frame A and/or frame B may be visually labelled as having been tampered with, as in step 310.

The visual labelling, in step 310, may take any form appropriate to make clear that tampering has occurred, which may include one or any combination of the following techniques:

(i) replacing any or all of the tampered image pixels with a known value. The known value is preferably selected to be sufficiently different from the source image content such that the tampering is clearly visible, for example black, white, any saturated colour, any non-natural colour;

(ii) altering only the coloured appearance of a tampered pixel such that the underlying image content remains visible but the tampering is clearly marked;

(iii) replacing only one component of a tampered pixel with a known value, for example 0 or 255, in an image format comprising more than one component;

(iv) visually labelling (using one or more of (i) or (ii) or (iii) above) the complete image frame within which any of the pixels are detected as having been tampered with and/or;

(v) visually labelling (using one or more of (i) or (ii) or (iii) above) the complete image frame, and all subsequent images in the video sequence, within and following an image frame in which any of the pixels are detected as having been tampered with.

Once the tampered frame(s) have been visually labelled, the process takes the next pixel from the 5th bit planes of the next frame A and frame B, as in step 306.

Examples of 'watermarking' communication units suitable for incorporating the aforementioned inventive concepts are described in co-filed UK patent applications GB9914384.4 and GB0031085.4, of the present applicant.

However, FIG. 4 describes a preferred configuration of video/image communication units to implement the preferred embodiment of the present invention. Referring now to FIG. 4, a video communication system 400 is shown, in accordance with the preferred embodiment of the invention. The video communication system 400 includes a transmitting video/image communication unit 405 for embedding a watermark, and a receiving video/image communication unit 450 for detecting a watermark.

The transmitting video/image communication unit 405, includes a video/image input port 415 for receiving video/image signals. A video/image signal is passed to processor 410, which includes three watermark-embedding processes.

A first selection function/algorithm 420 selects the component in which to embed the tamper evidence. A second selection function/algorithm 425 then selects the region of the video/image in which to embed the tamper evidence. The tamper evidence is then applied in function/algorithm 430, in accordance with the method described with respect to FIG. 1 and FIG. 2. The video signal is then transmitted from transmitter 435 to the receiving video/image communication unit 450. It is within the contemplation of the invention that alternative forms of moving video or image data may be used, for example 'transmission' may take the form of copying onto video tape, sending as an internet file, copying onto a floppy disk etc.

The receiving video/image communication unit 450 includes a receiver 455 for receiving video/image signals. A received watermarked video/image signal is passed to processor 460, which includes three watermark processes.

A first function/algorithm 465 applies the tamper evidence, in accordance with the method described with respect to FIG. 1 and FIG. 2. A second tamper detection function/algorithm 470 then detects whether tampering occurred, in accordance with the method described with respect to FIG. 3. If tampering is detected, the video/image signal is passed to a third visually labelling function/algorithm 475, to label the tampered areas, prior to passing the tampered signal to a display 480.

A benefit of the aforementioned inventive concepts is that they can be readily implemented in existing video communication units. More generally, the set of algorithms used to effect the image frame/$5^{th}$ bit plane manipulation and processing may be implemented in a respective communication unit in any suitable manner. For example, new apparatus may be added to a conventional communication unit.

Alternatively existing parts of a conventional communication unit may be adapted, for example by reprogramming one or more processors therein. As such the required adaptation may be implemented in the form of processor-implementable instructions stored on a storage medium, such as a floppy disk, hard disk, programmable read only memory (PROM), random access memory (RAM) or any combination of these or other storage multimedia.

It will be understood that the video transmission and watermarking arrangements described above provide at least the following advantages:

(i) means for submission of video evidence to a court of law for which it may be shown that the video has not been tampered with since initial acquisition and storage;
(ii) means for purchasers of video and image material to authenticate the material such that it has not been altered since initial acquisition and storage;
(iii) means for distributors of video and image material to verify that material passed to them for distribution is genuine and has not been tampered with since initial acquisition and storage; and
(iv) means for fraudulent tampering of images and video to be detected, and the location of such tampering to be revealed to users of the material.

Thus a video communication unit has been provided, including a video input for receiving an un-watermarked video or image signal transmission having a number of video or image frames, wherein each video or image frame includes a number of bit planes. The video input is operably coupled to a processor. The processor splits at least one bit plane from each of at least two video or image frames into a first and second portion and combines a second portion of a bit plane of a first frame with a first portion of a bit plane of a second frame, to apply a watermark bit to the video or image signal transmission.

In addition, or in the alternative, a video communication unit includes a video receiver for receiving, from a transmitting video communication unit, a watermarked video signal transmission having a number of video or image frames, wherein each video or image frame includes a number of bit planes. The receiver is operably coupled to a processor. The processor compares at least one bit plane each of at least two video or image frames to detect any tampering of the watermark.

A mobile radio device, for example a mobile phone, a portable or mobile PMR radio, a personal digital assistant, a laptop computer or a wirelessly networked PC may incorporate any of the aforementioned video communication units.

Furthermore, a method of watermarking a video signal transmission in a video transmission system has been described. The method includes the step of receiving an un-watermarked video or image signal transmission having a number of video or image frames, wherein each video or image frame includes a number of bit planes. The method further includes the steps of splitting at least one bit plane from each of at least two video or image frames into a first and second portion, and combining a second portion of a bit plane of a first frame with a first portion of a bit plane of a second frame to apply a watermark bit to the video or image signal transmission.

In addition, or in the alternative, a method of detecting tampering of a watermarked digital image has been described. The method includes the steps of receiving a digitally watermarked image having a number of video or image frames, wherein each video or image frame includes a number of bit planes, at least one of which is watermarked. The method further includes the steps of extracting said watermarked bit plane from each of at least two video or image frames, and comparing said at least one watermarked bit plane between each of said at least two video or image frames to detect any tampering of the watermark.

Further, a storage medium, storing processor-implementable instructions for controlling one or more processors to carry out the above-mentioned method steps, has been described.

## Claims

1. A video communication unit (405) comprising a video input (415) for receiving an un-watermarked video or image signal transmission having a number of video or image frames (110, 120, 130, 140), wherein each video or image frame includes a number of bit planes, the video input (415) being operably coupled to a processor (410), the video communication unit (405) **characterised by** said processor (410):

   splitting at least one bit plane (116) from each of at least two video or image frames (205, 210) into a first and second portion; and
   combining (235, 242, 232, 245) a second portion of a bit plane of a first frame with a first portion of a bit plane of a second frame, to provide a watermarked bit plane such that a watermark bit is applied to the video or image signal transmission.

2. The video communication unit according to claim 1, wherein the combining of at least one bit plane from at least portions of two video or image frames (205, 210) is made between consecutive video or image frames.

3. The video communication unit according to claim 1 or claim 2, wherein the consecutive frames are then arranged such that they include the same watermarked bit plane (250, 260).

4. The video communication unit according to any preceding claim, wherein the step of combining portions of at least one bit plane includes the step of discarding the portions that are not used to form the watermarked bit plane to be transmitted.

5. The video communication unit according to any preceding claim, wherein the combining of at least one bit plane is repeated throughout the video or image signal transmission.

6. The video communication unit according to any preceding claim, wherein the combining of at least one bit plane includes combining a subset of pixels within a frame.

7. A video communication unit (450) comprising a video receiver (455) for receiving, from a transmitting video communication unit (405) according to any preceding claim, a watermarked video signal transmission having a number of video or image frames, wherein each video or image frame includes a number of bit planes, the receiver being operably coupled to a processor (460), the video communication unit (450) **characterised by** said processor (460) comparing (302) at least one bit plane of each of at least two video or image frames to detect any tampering of the watermark.

8. The video communication unit (450) according to claim 7, further **characterised by** said processor (460) determining (304) whether a frame has been tampered with by comparing the at least one bit plane between the at least two frames, wherein:

   if said comparison shows equal bit planes, no tampering occurred; and
   if said comparison shows unequal bit planes (308), tampering occurred.

9. The video communication unit (450) according to claim 7 or claim 8, wherein the processor (460) detects tampering of an area of an image, said processor visually labelling (475), upon detection of said tampering, said area to inform a user viewing the video of said tampering.

10. The video communication unit (450) according to claim 9, wherein said visual labelling (475) includes replacing any or all of the tampered image with a known value such that the tampering is visible, for example black, white, any saturated colour, and/or any non-natural colour.

11. The video communication unit (450) according to claim 9, wherein said visual labelling (475) includes altering only a coloured appearance of a tampered pixel such that the underlying image content remains visible but the tampering is marked.

12. The video communication unit (450) according to claim 9, wherein said visual labelling (475) includes replacing one component of a tampered pixel with a known value in an image format comprising more than one component.

13. The video communication unit (450) according to any of claims 9 to 12, wherein a complete image frame is visually labelled (475), when any of the pixels within said frame are detected as having been tampered with.

14. The video communication unit (450) according to claim 13, wherein the complete image frame and all subsequent images in the video sequence within and/or following an image frame in which any of the pixels are detected as having been tampered with are visually labelled.

15. The video communication unit (405, 450) according to any preceding claim, wherein the watermark is applied to at least one of the following image formats: YCbCr, RGB, or any single component of an image format.

16. The video communication unit (405, 450) according to any preceding claim wherein the watermark is applied in a restricted area or region of an image, or throughout the entire image.

17. A video transmission system (400) comprising the video communication unit of any of the preceding claims.

18. A mobile radio device comprising a video communication unit (405, 450) in accordance with any of claims 1 to 16.

19. The mobile radio device of claim 18, wherein the mobile radio device is a mobile phone, a portable or mobile PMR radio, a personal digital assistant, a lap-top computer or a wirelessly networked PC.

20. A method of watermarking (200) a video signal transmission in a video transmission system, the method comprising the step of receiving (415) an un-watermarked video or image signal transmission having a number of video or image frames, wherein each video or image frame includes a number of bit planes, the method **characterised by** the steps of:

splitting at least one bit plane (116) from each of at least two video or image frames (112, 114, 205, 210) into a first and second portion; and
combining (235, 242, 232, 245) a second portion of a bit plane of a first frame with a first portion of a bit plane of a second frame to provide a watermarked bit plane such that a watermark bit is applied to the video or image signal transmission.

21. The method of watermarking (200) a video signal transmission according to claim 20, wherein the step of combining includes combining at least one bit plane from at least portions of each of two video or image frames between consecutive video or image frames.

22. The method of watermarking (200) a video signal transmission according to claim 21, wherein the step of combining includes arranging the frames such that they include the same watermarked bit plane.

23. The method of watermarking (200) a video signal transmission according to any of claims 20 to 22, the method further **characterised by** the step of:

discarding the portions of the frames that are not used to form the watermarked bit plane to be transmitted.

24. The method of watermarking (200) a video signal transmission according to any of claims 20 to 23, wherein the step of combining of at least one bit plane is repeated throughout the video or image signal transmission.

25. The method of watermarking (200) a video signal transmission according to any of claims 20 to 24, wherein the step of combining includes the step of:

combining a subset of pixels within a frame.

26. A method of detecting tampering (300) of a watermarked digital image, the method comprising the steps of receiving (455) a digitally watermarked image having a number of video or image frames, wherein each video or image frame includes a number of bit planes, at least one of which is watermarked according to the method of any one of claims 20 through 25, the method **characterised by** the steps of:

extracting (465) said watermarked bit plane from each of at least two video or image frames; and
comparing (302) said at least one watermarked bit plane between each of said at least two video or image frames to detect any tampering of the watermark (470).

27. The method of detecting tampering (300) of a watermarked digital image according to claim 26, wherein the step of detecting includes the step of determining whether a frame has been tampered with by comparing the at least one bit plane between each of the at least two frames, wherein:

if said comparison shows equal bit planes, no tampering occurred; or
if said comparison shows unequal bit planes, tampering occurred (308).

28. A method of visually labelling (475) a video sequence containing an attacked watermark, comprising the steps of:

detecting tampering (470) of an area of an image according to the method of claim 26 or claim 27; and
visually labelling (475) said area to inform a user viewing the video of said tampering.

29. The method of visually labelling (475) a video sequence according to claim 28, the method further **characterised by** the step of altering a coloured appearance of a tampered pixel to inform a user viewing the video/image sequence of said tampering.

30. The method of visually labelling (475) a video sequence according to claim 28, wherein said visually labelling (475) step includes the step of replacing any or all of a tampered image with a known value such that the tampering is visible, for example black, white, any saturated colour, and/or any non-natural colour.

31. The method of visually labelling (475) a video sequence according to claim 28, wherein said visually labelling (475) step includes the step of altering only a coloured appearance of a tampered pixel such that the underlying image content remains visible but the tampering is marked.

32. The method of visually labelling (475) a video sequence according to claim 28, wherein said visually labelling (475) step includes the step of replacing one component of a tampered pixel with a known value in an image format comprising more than one component.

33. The method of visually labelling (475) a video/image sequence according to any of claims 28 to 32, wherein said visually labelling (475) step includes the step of visually labelling a complete image frame within which any of the pixels are detected as having been tampered with.

34. A storage medium storing processor-implementable instructions for controlling one or more processors (410, 460) to carry out the method of any of claims 20 to 33.

**Patentansprüche**

1. Videokommunikationseinheit (405), welche einen Videoeingang (415) für den Empfang einer Video- oder Bildsignalübertragung ohne Wasserzeichen mit einer Reihe von Video- oder Bild-Frames (110, 120, 130, 140) aufweist, **dadurch gekennzeichnet, dass** jeder Video- oder Bild-Frame eine Reihe von Bit-Schichten aufweist, wobei der Videoeingang (415) betriebsbereit mit einem Prozessor (410) gekoppelt ist, wobei die Videokommunikationseinheit (405) **dadurch gekennzeichnet ist, dass** der Prozessor (410)
mindestens eine Bit-Schicht (116) von jedem von mindestens zwei Video- oder Bild-Frames (205, 210) in einen ersten und einen zweiten Abschnitt teilt; und

einen zweiten Abschnitt einer Bit-Schicht eines ersten Frames mit einem ersten Abschnitt einer Bit-Schicht eines zweiten Frames kombiniert (235, 242, 232, 245), um eine mit einem Wasserzeichen versehene Bit-Schicht derart bereitzustellen, dass ein Wasserzeichen-Bit an der Video- oder Bildsignalübertragung angebracht wird.

2. Videokommunikationseinheit nach Anspruch 1, wobei das Kombinieren mindestens einer Bit-Schicht aus mindestens zwei Abschnitten von zwei Video- oder Bild-Frames (205, 210) zwischen fortlaufenden Video- oder Bild-Frames erfolgt.

3. Videokommunikationseinheit nach Anspruch 1 oder Anspruch 2, **dadurch gekennzeichnet, dass** die fortlaufenden Frames dann derart angeordnet werden, dass sie dieselbe mit einem Wasserzeichen versehene Bit-Schicht (250, 260) aufweisen.

4. Videokommunikationseinheit nach einem der vorhergehenden Ansprüche, **dadurch gekennzeichnet, dass** der Schritt der Kombination von Abschnitten mindestens einer Bit-Schicht den Schritt des Streichens der Abschnitte einschließt, welche nicht zur Bildung der mit einem Wasserzeichen versehenen zu übertragenden Bit-Schicht verwendet wird.

5. Videokommunikationseinheit nach einem der vorhergehenden Ansprüche, **dadurch gekennzeichnet, dass** das Kombinieren mindestens einer Bit-Schicht während der gesamten Video- oder Bildsignalübertragung wiederholt wird.

6. Videokommunikationseinheit nach einem der vorhergehenden Ansprüche, **dadurch gekennzeichnet, dass** das Kombinieren mindestens einer Bit-Schicht das Kombinieren einer Teilmenge von Pixeln innerhalb eines Frames einschließt.

7. Videokommunikationseinheit (450), welche einen Videoempfänger (455) aufweist, welcher so ausgelegt ist, dass er von einer übertragenden Videokommunikationseinheit (405) gemäß einem der vorherigen Ansprüche eine mit einem Wasserzeichen versehene Videosignalübertragung empfängt, welche eine Reihe von Video- oder Bild-Frames aufweist, **dadurch gekennzeichnet, dass** jeder Video- oder Bild-Frame eine Reihe von Bit-Schichten einschließt, wobei der Empfänger betriebsbereit mit einem Prozessor (460) verbunden ist, wobei die Videokommunikationseinheit (450) **dadurch gekennzeichnet ist, dass** der Prozessor (460) zumindest eine Bit-Schicht von mindestens zwei Video- oder Bild-Frames zur Detektion jeglicher Manipulation des Wasserzeichens vergleicht.

8. Videokommunikationseinheit (450) nach Anspruch 7, welche weiter **dadurch gekennzeichnet ist, dass** der Prozessor (460) bestimmt (304), ob ein Frame manipuliert worden ist, indem er die mindestens eine Bit-Schicht zwischen den mindestens zwei Frames vergleicht, wobei:

in dem Fall, dass der Vergleich identische Bit-Schichten zeigt, keine Manipulation stattgefunden hat; und
in dem Fall, dass der Vergleich ungleiche Bit-Schichten (308) zeigt, eine Manipulation stattgefunden hat.

9. Videokommunikationseinheit (450) nach einem der Ansprüche 7 oder 8, **dadurch gekennzeichnet, dass** der Prozessor (460) eine Manipulation eines Bereichs eines Bildes erfasst, wobei der Prozessor nach der Detektion der Manipulation diesen Bereich optisch kenntlich macht (475), um einen Betrachter des Videos über die Manipulation zu informieren.

10. Videokommunikationseinheit (450) nach Anspruch 9, **dadurch gekennzeichnet, dass** die optische Kennzeichnung (475) das Ersetzen eines beliebigen oder aller manipulierter Bilder durch einen bekannten Wert einschließt, so dass die Manipulation sichtbar ist, beispielsweise schwarz, weiss, jede beliebige satte oder dunkle Farbe, und/oder jede beliebige nicht-natürliche Farbe.

11. Videokommunikationseinheit (450) nach Anspruch 9, **dadurch gekennzeichnet, dass** die optische Kennzeichnung (475) nur die Veränderung einer farblichen Erscheinung eines manipulierten Pixels aufweist, so dass ein darunterliegender Bildinhalt sichtbar bleibt, jedoch der manipulierte Bereich markiert ist.

12. Videokommunikationseinheit (450) nach Anspruch 9, **dadurch gekennzeichnet, dass** die optischen Kennzeichnung (475) das Ersetzen einer Komponente eines manipulierten Pixels durch einen bekannten Wert in einem Bildformat einschließt, welches mehr als eine Komponente aufweist.

**13.** Videokommunikationseinheit (450) nach einem der Ansprüche 9 bis 12, **dadurch gekennzeichnet, dass** ein vollständiger Bild-Frame optisch **gekennzeichnet** wird (475), wenn erfasst wird, dass irgendeines der Pixel in dem Frame manipuliert worden ist.

**14.** Videokommunikationseinheit (450) nach Anspruch 13, **dadurch gekennzeichnet, dass** der vollständige Bild-Frame und alle nachfolgenden Bilder in der Videosequenz in und/oder im Anschluss an einen Bildframe, in welchem erfasst wird, dass irgendeines der Pixel manipuliert worden ist, optisch **gekennzeichnet** werden.

**15.** Videokommunikationseinheit (405, 450) nach einem der vorhergehenden Ansprüche, **dadurch gekennzeichnet, dass** das Wasserzeichen in zumindest einem der nachfolgenden Bildformate angebracht wird: YCbCr, RGB oder jede beliebige einzelne Komponente eines Bildformats.

**16.** Videokommunikationseinheit (405, 450) nach einem der vorhergehenden Ansprüche, **dadurch gekennzeichnet, dass** ein Wasserzeichen in einem begrenzten Bereich oder einer Zone eines Bildes, oder auf dem gesamten Bild angebracht wird.

**17.** Videoübertragungssystem (400), welches eine Videokommunikationseinheit gemäß einem der vorhergehenden Ansprüche aufweist.

**18.** Mobilfunkvorrichtung, welche eine Videokommunikationseinheit (405, 450) gemäß einem der Ansprüche 1 bis 16 aufweist.

**19.** Mobilfunkvorrichtung nach Anspruch 18, **dadurch gekennzeichnet, dass** die Mobilfunkvorrichtung ein Mobiltelefon, eine tragbare oder mobile private Funkeinrichtung, ein persönlicher digitaler Assistent, ein Aktentaschen-Computer oder ein drahtlos vernetzter Personalcomputer ist.

**20.** Verfahren zur Anbringung (200) eines Wasserzeichens an einer Videosignalübertragung in einem Videoübertragungssystem, wobei das Verfahren den Schritt des Empfangens (415) einer Video- oder Bildsignalübertragung, welche eine Reihe von Video- oder Bild-Frames einschließt, ohne Wasserzeichen aufweist, **dadurch gekennzeichnet, dass** jeder Video- oder Bild-Frame eine Reihe von Bit-Schichten aufweist, wobei das Verfahren durch folgende Schritte **gekennzeichnet** ist:

Trennen mindestens einer Bit-Schicht (116) von jeder der mindestens zwei Video- oder Bild-Frames (112, 114, 205, 210) in einen ersten und zweiten Abschnitt; und

Kombinieren (235, 242, 232, 245) eines zweiten Abschnitts einer Bit-Schicht eines ersten Frames mit einem ersten Abschnitt einer Bit-Schicht eines zweiten Rahmens, um eine mit einem Wasserzeichen versehene Bit-Schicht bereitzustellen, so dass ein Wasserzeichenbit an der Video- oder Bildsignalübertragung angebracht wird.

**21.** Verfahren zur Anbringung (200) eines Wasserzeichens an einer Videosignalübertragung nach Anspruch 20, wobei der Kombinationsschritt das Kombinieren mindestens einer Bit-Schicht von zumindest Abschnitten eines jeden der beiden Video- oder Bildframes zwischen nachfolgenden Video- oder Bild-Frames einschließt.

**22.** Verfahren zur Anbringung (200) eines Wasserzeichens an einer Videosignalübertragung nach Anspruch 21, wobei der Kombinationsschritt das Anordnen der Frames derart einschließt, dass sie dieselbe mit einem Wasserzeichen versehene Bit-Schicht einschließen.

**23.** Verfahren zur Anbringung (200) eines Wasserzeichens an einer Videosignalübertragung nach einem der Ansprüche 20 bis 22, wobei das Verfahren weiter durch den folgenden Schritt **gekennzeichnet** ist:

Löschen der Abschnitte der Frames, die nicht zur Bildung der mit dem Wasserzeichen versehenen zu übertragenden Bit-Schicht verwendet werden.

**24.** Verfahren zur Anbringung (200) eines Wasserzeichens an einer Videosignalübertragung nach einem der Ansprüche 20 bis 23, wobei der Kombinationsschritt mindestens einer Bit-Schicht während der gesamten Video- oder Bildsignalübertragung wiederholt wird.

**25.** Verfahren zur Anbringung (200) eines Wasserzeichens an einer Videosignalübertragung nach einem der Ansprüche 20 bis 24, **dadurch gekennzeichnet, dass** der Kombinationsschritt den folgenden Schritt einschließt:

Kombinieren einer Teilmenge von Pixeln innerhalb eines Frames.

26. Verfahren zur Detektion einer Manipulation (300) eines mit einem Wasserzeichen versehenen digitalen Bildes, wobei das Verfahren die Schritte des Empfangs (455) eines digital mit einem Wasserzeichen versehenen Bildes, welches eine Reihe von Video- oder Bild-Frames aufweist, umfasst, **dadurch gekennzeichnet, dass** jeder Video- oder Bild-Frame eine Reihe von Bit-Schichten einschließt, von denen mindestens eine mit einem Wasserzeichen gemäß dem Verfahren nach einem der Ansprüche 20 bis 25 versehen ist, wobei das Verfahren durch die folgenden Schritte **gekenn-zeichnet** ist:

Extrahieren (465) der mit einem Wasserzeichen versehenen Bit-Schicht aus jedem der zumindest zwei Video- oder Bild-Frames; und
Vergleichen (302) der mindestens einen mit einem Wasserzeichen versehenen Bit-Schicht zwischen jeder der mindestens zwei Video- oder Bild-Frames, um jegliche Manipulation des Wasserzeichens (470) zu erfassen.

27. Verfahren zur Detektion einer Manipulation (300) eines mit einem Wasserzeichen versehenen digitalen Bildes nach Anspruch 26, **dadurch gekennzeichnet, dass** der Schritt der Erfassung den Schritt der Bestimmung einschließt, ob ein Frame manipuliert worden ist, indem die mindestens eine Bit-Schicht zwischen jeder der mindestens zwei Frames verglichen wird, wobei:

in dem Fall, dass der Vergleich identische Bit-Schichten zeigt, keine Manipulation stattgefunden hat; oder
in dem Fall, dass der Vergleich ungleiche Bit-Schichten zeigt, eine Manipulation stattgefunden hat (308).

28. Verfahren zur optischen Kennzeichnung (475) einer Videosequenz, welche ein angegriffenes oder manipuliertes Wasserzeichen aufweist, wobei das Verfahren die folgenden Schritte aufweist:

Detektieren einer Manipulation (470) eines Bereichs eines Bildes gemäß dem Verfahren nach Anspruch 26 oder 27; und
Optisches Kennzeichnen (475) dieses Bereichs, um den Betrachter des Videos über die Manipulation zu informieren.

29. Verfahren zur optischen Kennzeichnung (475) einer Videosequenz nach Anspruch 28, **dadurch gekennzeichnet, dass** das Verfahren weiter durch den Schritt der Veränderung einer farblichen Erscheinungsbildes eines manipulierten Pixels **gekennzeichnet** ist, um den Betrachter der Video-/Bildfolge über die Manipulation zu informieren.

30. Verfahren zur optischen Kennzeichnung (475) einer Videosequenz nach Anspruch 28, **dadurch gekennzeichnet, dass** der Schritt der optische Kennzeichnung (475) den Schritt des Ersetzen eines oder aller manipulierter Bilder durch einen bekannten Wert einschließt, so dass eine Manipulation sichtbar ist, beispielsweise schwarz, weiss, jede beliebige satte oder dunkle Farbe, und/oder jede beliebige nicht-natürliche Farbe.

31. Verfahren zur optischen Kennzeichnung (475) einer Videosequenz nach Anspruch 28, **dadurch gekennzeichnet, dass** der Schritt der optischen Kennzeichnung (475) den Schritt nur der Veränderung des farblichen Erscheinungsbildes eines manipulierten Pixels einschließt, so dass der darunterliegende Bildinhalt sichtbar bleibt, die Manipulation jedoch markiert ist.

32. Verfahren zur optischen Kennzeichnung (475) einer Videosequenz nach Anspruch 28, **dadurch gekennzeichnet, dass** der Schritt der optischen Kennzeichnung (475) den Schritt des Ersetzens einer Komponente eines manipulierten Pixels durch einen bekannten Wert in einem Bildformat, das mehr als eine Komponente aufweist, einschließt.

33. Verfahren zur optischen Kennzeichnung (475) einer Video-/Bildsequenz nach einem der Ansprüche 28 bis 32, **dadurch gekennzeichnet, dass** der Schritt der optischen Kennzeichnung (475) den Schritt der optischen Kennzeichnung eines vollständigen Bild-Frames aufweist, in welchem irgendeines der Pixel erfasst wird, welches manipuliert worden ist.

34. Speichermedium, welches in einen Prozessor implementierbare Instruktionen zur Steuerung eines oder mehrerer Prozessoren (410, 460) speichert, um das Verfahren nach einem der Ansprüche 20 bis 33 auszuführen.

**Revendications**

1. Unité de communication vidéo (405) comprenant une entrée vidéo (415) pour recevoir une transmission de signal vidéo ou d'image non filigrané ayant une pluralité de trames vidéo ou d'image (110, 120, 130, 140), dans lesquelles chaque trame vidéo ou d'image comprend une pluralité de plans binaires, l'entrée vidéo (415) étant fonctionnellement couplée à un processeur (410), l'unité de communication vidéo (405) étant **caractérisée en ce que** ledit processeur (410):

   divise au moins un plan binaire (116) de chacune parmi au moins deux trames vidéo ou d'image (205, 210) en une première et une seconde partie; et
   combine (235, 242, 232, 245) une seconde partie d'un plan binaire d'une première trame avec une première partie d'un plan binaire d'une seconde trame, pour produire un plan binaire filigrané de sorte qu'un bit de filigrane soit appliqué à la transmission de signal vidéo ou d'image.

2. Unité de communication vidéo selon la revendication 1, dans laquelle la combinaison d'au moins un plan binaire d'au moins des parties de deux trames vidéo ou d'image (205, 210) est effectuée entre des trames vidéo ou d'image consécutives.

3. Unité de communication vidéo selon la revendication 1 ou la revendication 2, dans laquelle les trames consécutives sont ensuite agencées de sorte qu'elles comprennent le même plan binaire filigrané (250, 260).

4. Unité de communication vidéo selon l'une quelconque des revendications précédentes, dans laquelle l'étape de combinaison de parties d'au moins un plan binaire comprend l'étape d'élimination des parties qui ne sont pas utilisées pour former le plan binaire filigrané destiné à être transmis.

5. Unité de communication vidéo selon l'une quelconque des revendications précédentes, dans laquelle la combinaison d'au moins un plan binaire est répétée dans l'ensemble de la transmission de signal vidéo ou d'image.

6. Unité de communication vidéo selon l'une quelconque des revendications précédentes, dans laquelle la combinaison d'au moins un plan binaire comprend la combinaison d'un sous-ensemble de pixels dans une trame.

7. Unité de communication vidéo (450) comprenant un récepteur vidéo (455) pour recevoir, depuis une unité de communication vidéo émettrice (405) selon l'une quelconque des revendications précédentes, une transmission de signal vidéo filigrané ayant une pluralité de trames vidéo ou d'image, dans lesquelles chaque trame vidéo ou d'image comprend une pluralité de plans binaires, le récepteur étant fonctionnellement couplé à un processeur (460), l'unité de communication vidéo (450) étant **caractérisée en ce que** ledit processeur (460) compare (302) au moins un plan binaire de chacune parmi au moins deux trames vidéo ou d'image pour détecter une altération quelconque du filigrane.

8. Unité de communication vidéo (450) selon la revendication 7, **caractérisée en outre en ce que** ledit processeur (460) détermine (304) si une trame a été altérée par comparaison de l'au moins un plan binaire entre les au moins deux trames, dans laquelle:

   si ladite comparaison démontre que les plans binaires sont égaux, aucune altération ne s'est produite; et
   si ladite comparaison démontre que les plans binaires sont inégaux (308), une altération s'est produite.

9. Unité de communication vidéo (450) selon la revendication 7 ou la revendication 8, dans laquelle le processeur (460) détecte une altération d'une zone d'une image, ledit processeur marquant visuellement (475), lors de la détection de ladite altération, ladite zone pour informer un utilisateur visualisant la vidéo de ladite altération.

10. Unité de communication vidéo (450) selon la revendication 9, dans laquelle ledit marquage visuel (475) comprend le remplacement de tout ou partie de l'image altérée par une valeur connue de sorte que l'altération soit visible, par exemple, noir, blanc, une couleur saturée quelconque, et/ou une couleur non naturelle quelconque.

11. Unité de communication vidéo (450) selon la revendication 9, dans laquelle ledit marquage visuel (475) comprend la modification de l'aspect coloré uniquement d'un pixel altéré de sorte que le contenu d'image sous-jacent reste visible mais que l'altération soit marquée.

**12.** Unité de communication vidéo (450) selon la revendication 9, dans laquelle ledit marquage visuel (475) comprend le remplacement d'une seule composante d'un pixel altéré par une valeur connue dans un format d'image comprenant plus d'une composante.

**13.** Unité de communication vidéo (450) selon l'une quelconque des revendications 9 à 12, dans laquelle une trame d'image complète est visuellement marquée (475), lorsqu'un groupe quelconque des pixels dans ladite trame sont détectés comme ayant été altérés.

**14.** Unité de communication vidéo (450) selon la revendication 13, dans laquelle la trame d'image complète et toutes les images suivantes dans la séquence vidéo, dans et/ou après une trame d'image dans laquelle un groupe quelconque de pixels sont détectés comme ayant été altérés sont marquées visuellement.

**15.** Unité de communication vidéo (405, 450) selon l'une quelconque des revendications précédentes, dans laquelle le filigrane est appliqué à au moins l'un des formats d'image suivants, YCbCr, RVB, ou une composante individuelle quelconque d'un format d'image.

**16.** Unité de communication vidéo (405, 450) selon l'une quelconque des revendications précédentes dans laquelle le filigrane est appliqué dans une zone ou région restreinte d'une image, ou dans l'image entière.

**17.** Système de transmission vidéo (400) comprenant l'unité de communication vidéo selon l'une quelconque des revendications précédentes.

**18.** Dispositif de radiocommunication mobile comprenant une unité de communication vidéo (405, 450) selon l'une quelconque des revendications 1 à 16.

**19.** Dispositif de radiocommunication mobile selon la revendication 18, dans lequel le dispositif de radiocommunication mobile est un téléphone mobile, un système de radiocommunications professionnelles portable ou mobile, un assistant numérique personnel, un ordinateur portable ou un PC à réseau sans fil.

**20.** Procédé de filigranage (200) d'une transmission de signal vidéo dans un système de transmission vidéo, le procédé comprenant l'étape de réception (415) d'une transmission de signal vidéo ou d'image non filigrané ayant une pluralité de trames vidéo ou d'image, dans lesquelles chaque trame vidéo ou d'image comprend une pluralité de plans binaires, le procédé étant **caractérisé par** les étapes de:

division d'au moins un plan binaire (116) de chacune parmi au moins deux trames vidéo ou d'image (112, 114, 205, 210) en une première et une seconde partie; et
combinaison (235, 242, 232, 245) d'une seconde partie d'un plan binaire d'une première trame avec une première partie d'un plan binaire d'une seconde trame pour produire un plan binaire filigrané de sorte qu'un bit de filigrane soit appliqué à la transmission de signal vidéo ou d'image.

**21.** Procédé de filigranage (200) d'une transmission de signal vidéo selon la revendication 20, dans lequel l'étape de combinaison comprend la combinaison d'au moins un plan binaire d'au moins des parties de chacune parmi deux trames vidéo ou d'image entre des trames vidéo ou d'image consécutives.

**22.** Procédé de filigranage (200) d'une transmission de signal vidéo selon la revendication 21, dans lequel l'étape de combinaison comprend l'agencement des trames de sorte qu'elles comprennent le même plan binaire filigrané.

**23.** Procédé de filigranage (200) d'une transmission de signal vidéo selon l'une quelconque des revendications 20 à 22, le procédé étant **caractérisé en outre par** l'étape de:

élimination des parties des trames qui ne sont pas utilisées pour former le plan binaire filigrané destiné à être transmis.

**24.** Procédé de filigranage (200) d'une transmission de signal vidéo selon l'une quelconque des revendications 20 à 23, dans lequel l'étape de combinaison d'au moins un plan binaire est répétée dans l'ensemble de la transmission de signal vidéo ou d'image.

**25.** Procédé de filigranage (200) d'une transmission de signal vidéo selon l'une quelconque des revendications 20 à 24, dans lequel l'étape de combinaison comprend l'étape de:

combinaison d'un sous-ensemble de pixels dans une trame.

26. Procédé de détection d'altération (300) d'une image numérique filigranée, le procédé comprenant les étapes de: réception (455) d'une image numériquement filigranée ayant une pluralité de trames vidéo ou d'image, dans lesquelles chaque trames vidéo ou d'image comprend une pluralité de plans binaires, dont au moins l'un est filigrané selon le procédé de l'une quelconque des revendications 20 à 25, le procédé étant **caractérisé par** les étapes de:

extraction (465) dudit plan binaire filigrané à partir de chacune parmi au moins deux trames vidéo ou d'image; et comparaison (302) dudit au moins un plan binaire filigrané entre chacune desdites au moins deux trames vidéo ou d'image pour détecter une altération quelconque du filigrane (470).

27. Procédé de détection d'altération (300) d'une image numérique filigranée selon la revendication 26, dans lequel l'étape de détection comprend l'étape de détermination si une trame a été altérée par comparaison de l'au moins un plan binaire entre chacune des au moins deux trames, dans lequel:

si ladite comparaison démontre que les plans binaires sont égaux, aucune altération ne s'est produite; ou si ladite comparaison démontre que les plans binaires sont inégaux, une altération s'est produite (308).

28. Procédé de marquage visuel (475) d'une séquence vidéo contenant un filigrane altéré, comprenant les étapes de:

détection d'altération (470) d'une zone d'une image selon le procédé de la revendication 26 ou la revendication 27; et marquage visuel (475) de ladite zone pour informer un utilisateur visualisant la vidéo de ladite altération.

29. Procédé de marquage visuel (475) d'une séquence vidéo selon la revendication 28, le procédé étant **caractérisé en outre par** l'étape de modification de l'aspect coloré d'un pixel altéré pour informer un utilisateur visualisant la séquence de vidéo/image de ladite altération.

30. Procédé de marquage visuel (475) d'une séquence vidéo selon la revendication 28, dans lequel ladite étape de marquage visuel (475) comprend l'étape de remplacement de tout ou partie d'une image altérée par une valeur connue de sorte que l'altération soit visible, par exemple, noir, blanc, une couleur saturée quelconque, et/ou une couleur non naturelle quelconque.

31. Procédé de marquage visuel (475) d'une séquence vidéo selon la revendication 28, dans lequel ladite étape de marquage visuel (475) comprend l'étape de modification de l'aspect coloré uniquement d'un pixel altéré de sorte que le contenu d'image sous-jacent reste visible mais que l'altération soit marquée.

32. Procédé de marquage visuel (475) d'une séquence vidéo selon la revendication 28, dans lequel ladite étape de marquage visuel (475) comprend l'étape de remplacement d'une composante d'un pixel altéré par une valeur connue dans un format d'image comprenant plus d'une composante.

33. Procédé de marquage visuel (475) d'une séquence de vidéo/image selon l'une quelconque des revendications 28 à 32, dans lequel ladite étape de marquage visuel (475) comprend l'étape de marquage visuel d'une trame d'image entière dans laquelle un groupe quelconque de pixels ont été détectés comme ayant été altérés.

34. Support de stockage stockant des instructions pouvant être mises en oeuvre dans un processeur pour commander un ou plusieurs processeurs (410, 460) pour conduire le procédé de l'une quelconque des revendications 20 à 33.

*FIG. 1*

*FIG. 2*

BIT-WISE COMPARISON OF BIT 5
OF FRAME A WITH BIT 5 OF FRAME B ⌐302

304

YES
ARE
THEY EQUAL
?

NO

TAMPERING HAS OCCURED ⌐308

VISUALLY LABEL FRAME A
AND/OR FRAME B ⌐310

300

TAKE NEXT PIXEL ⌐306

FIG. 3

FIG. 4

400

405

SELECT COMPONENT IN
WHICH TO EMBED THE
TAMPER EVIDENCE
420

SELECT REGION IN
WHICH TO EMBED THE
TAMPER EVIDENCE
425

APPLY THE
TAMPER EVIDENCE
430

410

INPUT VIDEO IMAGE ⌐415

435 ⌐ TRANSMITTER

DISPLAY VIDEO/IMAGE ⌐480

455 ⌐ RECEIVER

460

VISUALLY LABEL
TAMPERED AREAS
475

DETECT
TAMPERED AREAS
470

APPLY THE TAMPER
DETECTION METHOD
465

450